# EUROPÄISCHE PATENTSCHRIFT

(11) **EP 0 505 704 B1**
(45) Veröffentlichungstag und Bekanntmachung des Hinweises auf die Patenterteilung: **12.07.1995**
(21) Anmeldenummer: 92102119.2
(22) Anmeldetag: 08.02.1992
(51) Int. Cl.: G21C 13/067, F16L 55/132

(54) **Dichteinrichtung für zylindrische Öffnungen, insbesondere zum Verschliessen von Pumpenstutzen im Innenraum von Kernreaktorbehältern**
Sealing device for cylindric apparatus, especially to plug pump tubes inside nuclear reactor containers
Dispositif d'étanchéité pour ouvertures cylindriques, en particulier pour obturer un manchon de pompe à l'intérieur des cuves d'un réacteur nucléaire

(30) Priorität: 13.03.1991 DE 4108055
(43) Veröffentlichungstag der Anmeldung: 30.09.1992
(73) Patentinhaber: THYSSEN INDUSTRIE AG, 45128 Essen (DE)
(72) Erfinder: Bierwirth, Helmut, W-3500 Kassel (DE)

(56) Entgegenhaltungen:
- DE-A- 3 228 802
- FR-E- 91 120
- GB-A- 911 758

## Beschreibung

Die Erfindung betrifft eine Dichteinrichtung für zylindrische Öffnungen, insbesondere zum Verschließen von Pumpenstutzen im Innenraum von Kernreaktorbehältern, nach dem Oberbegriff des Anspruchs 1.

Derartige Dichteinrichtungen werden bevorzugt in nukleartechnischen Anlagen im Zusammenhang mit Kontroll- und Wartungsarbeiten, insbesondere zur Abdichtung bzw. Trennung von Flüssigkeitskreisläufen in Reaktorbehältern, eingesetzt. Die besondere Eignung hierfür ergibt sich aus ihrer Fernbedienbarkeit, womit Gefährdungen für das Bedienungspersonal ausgeschlossen werden, weiterhin aus einer zuverlässigen Abdichtung der betreffenden Öffnung auch bei vom Dichteinsatz getrennten Setzwerkzeug und aus der Möglichkeit, die Dichteinsätze mit dem Setzwerkzeug auch entfernen zu können.

Aus der DE-PS 32 28 802 ist eine de- und remontable Abdichteinrichtung für Rohrleitungen, insbesondere zur Abdichtung der Hauptkühlmittelstutzen eines Reaktordruckbehälters, bekannt, die aus einem zylindrischen Dichteinsatz mit mindestens einem Dichtring und einem Bedienungsgerät zum Transportieren, Einsetzen und Demontieren des Dichteinsatzes besteht. Zur Aufnahme des Dichteinsatzes vom Bedienungsgerät wird dieses an Rollenarmen in den inneren der beiden koaxial angeordneten, axial zueinander verschieblichen, ringförmigen Dichtkörperteile eingeschoben. Die Verbindung zwischen Dichteinsatz und Bedienungsgerät erfolgt, indem an einer Kulissenscheibe des Bedienungsgerätes Verriegelungsbolzen radial nach außen bewegt werden und in Öffnungen des Dichteinsatzes eingreifen.

Als nachteilig an der bekannten Lösung wird angesehen, daß infolge des Raumbedarfes des in das Innere des Dichteinsatzes einschiebbaren Bedienungsgerätes nur Rohrleitungen größeren Durchmessers abgedichtet werden können.

Auch ist es von Nachteil, daß die Verbindung von Dichteinsatz und Bedienungsgerät über in Öffnungen eingreifende Bolzen eine exakte Positionierung der Komponenten in ihrer Drehlage voraussetzt, was gerade bei Fernbedienung und im Unterwasserbereich das Ankuppeln des Dichteinsatzes erheblich erschwert.

Von daher liegt der Erfindung die Aufgabe zugrunde, eine Dichteinrichtung der eingangs genannten Art so zu gestalten, daß auch zylindrische Öffnungen kleineren Durchmessers zuverlässig abgedichtet werden können und die Aufnahme des Dichteinsatzes durch das Setzwerkzeug unabhängig von der Drehlage möglich ist.

Diese Aufgabe wird bei einer gattungsgemäßen Dichteinrichtung durch die kennzeichnenden Merkmale des Anspruchs 1 gelöst.

Die mit der Erfindung erzielten Vorteile bestehen darin, daß die Dichteinrichtung eine zuverlässige Abdichtung von zylindrischen Öffnungen auch kleineren Durchmessers ermöglicht und daß die Verbindung von Dichteinsatz und Setzwerkzeug in jeder beliebigen, sich zufällig einstellenden Drehlage der Komponenten erfolgen kann.

Zur Übertragung großer Spannkräfte, die einen hohen Dichtheitsgrad erreichen lassen, aber einen ungeteilten Spannanker voraussetzen, ist eine Ausgestaltung der Erfindung nach den Merkmalen der Ansprüche 2 und 3 vorgesehen.

Mit der Ausführung der Erfindung nach Anspruch 4 wird eine zuverlässige Abdichtung auch bei geringen Spannkräften erzielt und die Stirnfläche der zylindrischen Öffnung, bspw. die Flanschfläche eines Pumpenstutzens, vor Beschädigung geschützt.

Um unzulässige Belastungen der Schwenklager der Spannklinken und Entriegelungshaken auszuschließen, wie sie bspw. durch Querkräfte bei der Kopplung von Dichteinsatz und Setzwerkzeug großer Masse entstehen können, und um die Zentrierung des Setzwerkzeuges am Dichteinsatz zu unterstützen, ist die Ausgestaltung der Erfindung nach den Merkmalen des Anspruches 5 vorgesehen.

Mit der Ausführung der Erfindung nach Anspruch 6 erfolgt ein Transport des Dichteinsatzes an der sich an den Lagerböcken abstützenden Hülse stets im entriegelten Zustand und damit entspanntem, nicht durch die Eigenmasse des äußeren Dichtkörperteils belastetem Dichtring, was ein problemloses Einfügen des Dichteinsatzes in die abzudichtende Öffnung ermöglicht.

Ein Ausführungsbeispiel der Erfindung ist in der Zeichnung dargestellt und wird im folgenden näher beschrieben. Es zeigt
- Fig. 1: einen im Längsschnitt dargestellten, entspannten Dichteinsatz A,
- Fig. 2: die im Dichteinsatz A befindliche Hülse im Längsschnitt in vergrößerter Darstellung,
- Fig. 3: den oberen, radial geteilten Flansch der Hülse,
- Fig. 4: den unteren, eine gegenüber Fig. 3 veränderte Teilung aufweisenden, Flansch der Hülse,
- Fig. 5: einen Schnitt der Hülse an der Linie C-C′ in Fig. 2,
- Fig. 6: einen Schnitt des Dichteinsatzes A an der Linie A-A′ in Fig. 1,
- Fig. 7: einen Schnitt des Dichteinsatzes A an der Linie B-B′ in Fig. 1,
- Fig. 8: ein im Längsschnitt dargestelltes, auf den Lagerböcken des Dichteinsatzes A aufsitzendes Setzwerkzeug B,
- Fig. 9: ein Setzwerkzeug B nach Fig. 8 mit radial nach innen geschwenkten Spannklinken und Entriegelungshaken,
- Fig. 10: einen Schnitt des Setzwerkzeuges B an der Linie D-D′ in Fig. 8 und
- Fig. 11: einen Schnitt des Setzwerkzeuges B an der Linie E-E′ in Fig. 8.

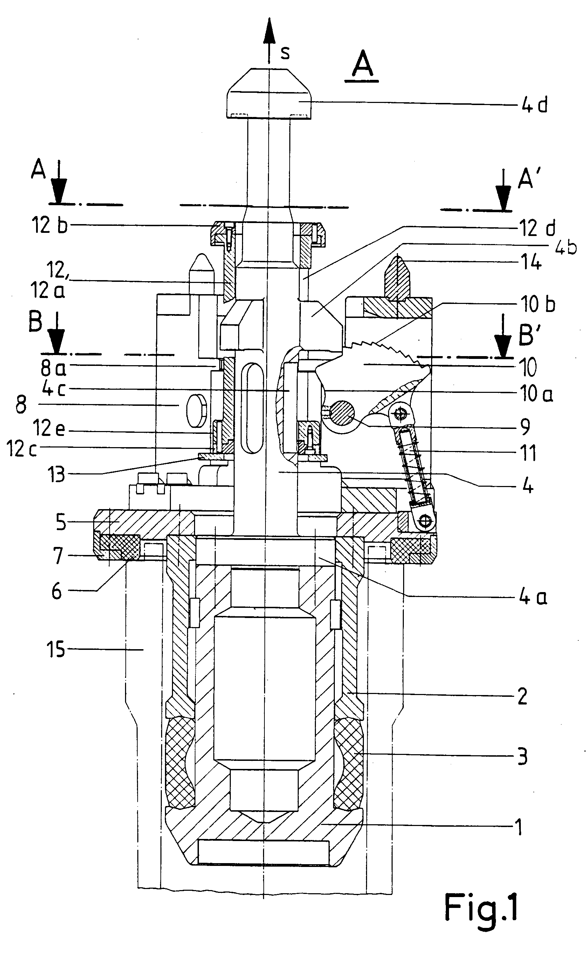

Wie in Fig. 1 dargestellt, weist der Dichteinsatz A einen Stopfenkern 1 und einen koaxial zu diesem angeordneten Stopfenmantel 2 auf, zwischen deren gegeneinander gerichteten Schulterflächen sich ein Dichtring 3 befindet. Der Stopfenkern 1 ist mit einem Spannanker 4 durch am Umfang des Spannankerflansches 4a angeordnete Schrauben verbunden. Weiterhin ist der Stopfenmantel 2 mit einer Ringscheibe 5 verbunden, die dichtringseitig eine Dichtung 6 aufweist, deren Lage durch einen in Ausnehmungen der Dichtung 6 und der Ringscheibe 5 eingreifenden Sicherungsring 7 fixiert ist. Auf der der Dichtung 6 abgewandten Seite der Ringscheibe 5 sind mit derselben mehrere, im vorliegenden Fall drei, Lagerböcke 8 verschraubt. Diese weisen an Bolzen 9 schwenkbare, mehrstufige Sperrklinken 10 auf, die durch Federbeine 11 angetrieben, bei Bewegung des Spannankers 4 in Spannrichtung s an am Umfang des Spannankers 4 vorgesehenen Vorsprüngen 4b einfallen und so eine selbsttätige, durch den vorgespannten Dichtring 3 bewirkte Rückführung des Spannankers 4 in seine Ausgangslage verhindern. Koaxial zum Spannanker 4 und auf diesem verschieblich ist eine Hülse 12 angeordnet.

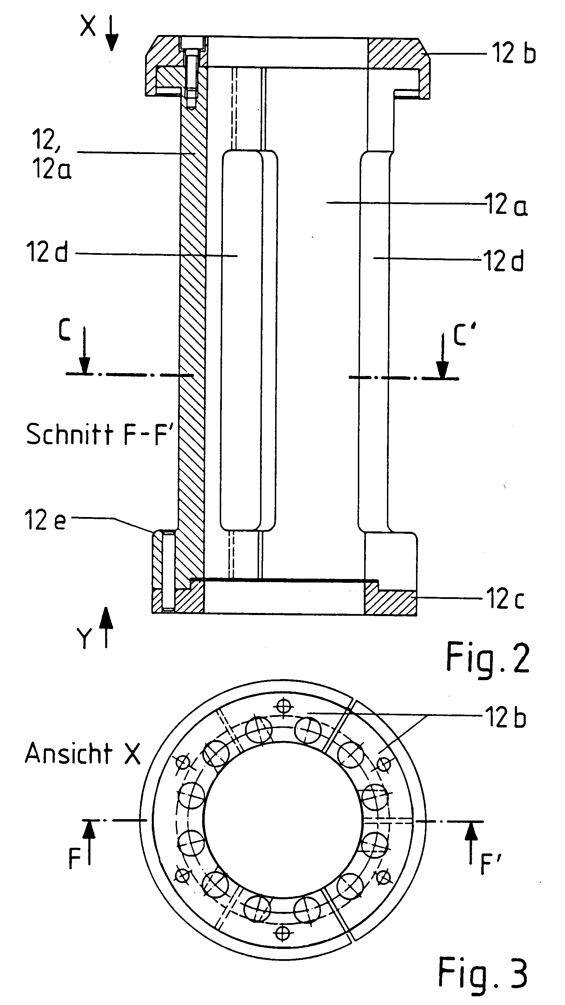

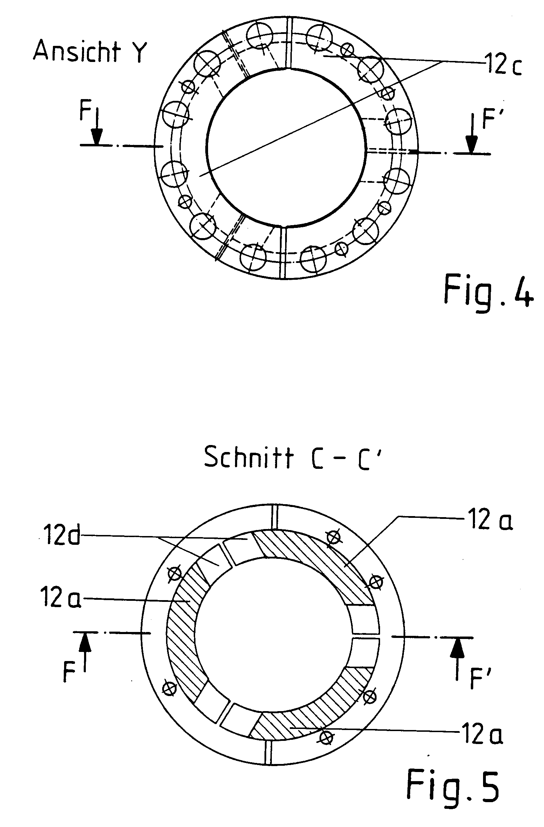

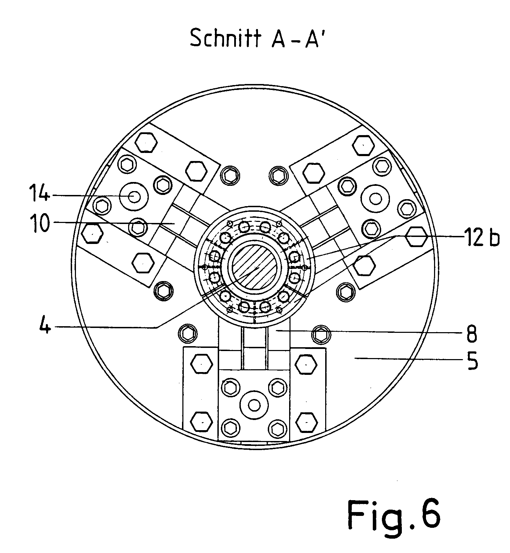

Wie aus Fig. 2 in Verbindung mit Fig.3,4 und 5 ersichtlich, besteht die Hülse 12 aus drei Gleitstücken 12a, die über einen oberen und einen unteren Flansch 12b, 12c zu einem starren Körper verschraubt sind. Die Flansche 12b und 12c sind derart radial zweigeteilt ausgeführt, daß die Montage aller Teile der Hülse 12 auf dem Spannanker 4 möglich ist (Fig. 3, 4, 6). Im montierten Zustand weist die Hülse 12 axial angeordnete Langlöcher 12d auf, durch welche sich radial nach außen gerichtet, die Vorsprünge 4b des Spannankers 4 erstrecken. An den Gleitstücken 12a sind Außenbundstücke 12e vorgesehen, die, wie in Fig. 1 erkennbar, bei Verschiebung der Hülse 12 in Spannrichtung s des Spannankers 4 gegen Gleitflächen 10a der Sperrklinken 10 drücken und eine radial nach außen gerichtete Schwenkbewegung der Sperrklinken 10 einleiten. Bei entlasteten Sperrklinken 10, d.h. bei Übertragung der Spannkraft des Spannankers 4 auf die Lagerböcke 8 oder die Ringscheibe 5, ist hierfür nur die Federkraft der Federbeine 11 zu überwinden.

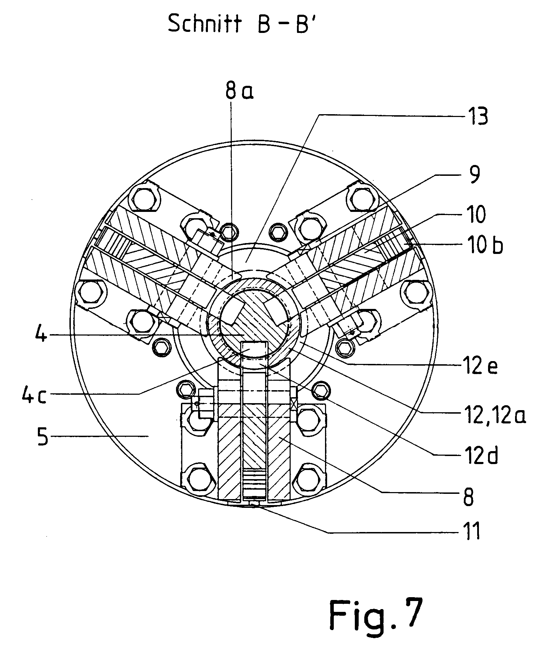

Bei in Spannrichtung s verschobenem Spannanker 4 und in entgegengesetzter Richtung bewegter Hülse 12 schwenken die Sperrklinken 10, angetrieben durch die Federbeine 11, radial nach innen und tauchen dabei mit ihren Gleitflächen 10a und ersten Klinkenstufen 10b in die Langlöcher 12d der Hülse 12 und in Ausnehmungen 4c des Spannankers 4 ein. Der Verschiebeweg der Hülse 12 wird von dem der Positonierung der Lagerböcke 8 dienenden Abstandsring 13 und den an den Lagerböcken 8 befindlichen Anschlägen 8a begrenzt. In der Endstellung der Hülse 12, in der die Außenbundstücke 12e der Hülse 12 an den Anschlägen 8a der Lagerböcke 8 anliegen(Fig. 1, 7), kann zweckmäßig ein Transport des Dichteinsatzes A ohne Krafteinwirkung auf den Dichtring 3 erfolgen, indem das noch näher zu beschreibende Setzwerkzeug B am oberen Flansch 12b der Hülse 12 angreift und sich an den Lagerböcken 8 abstützt.

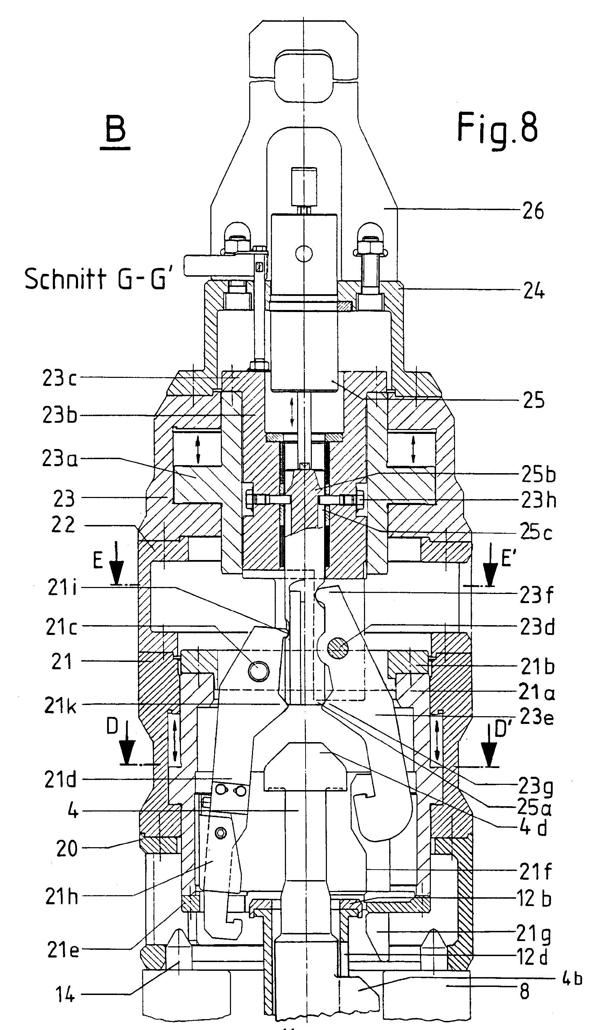

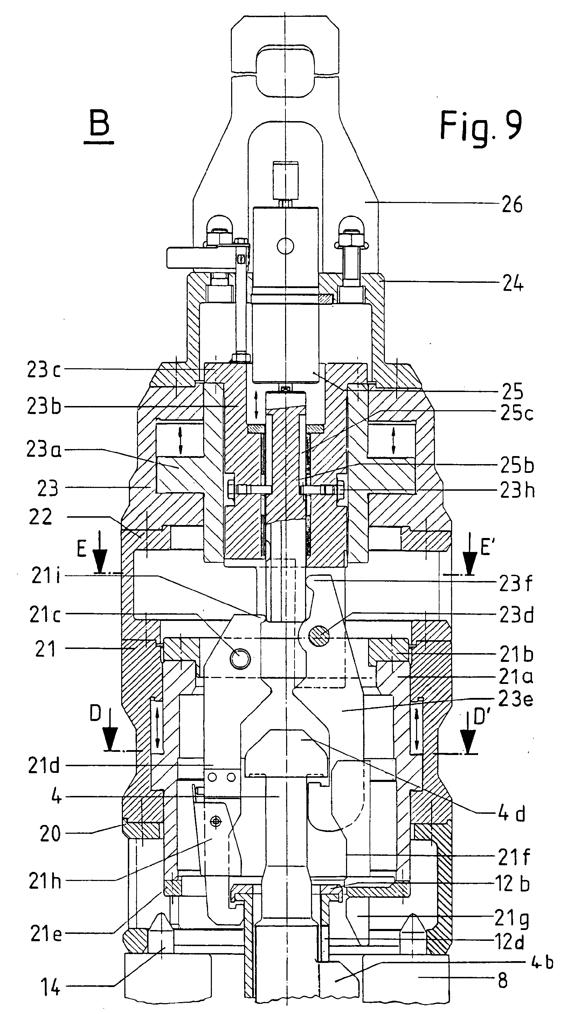

Das der Handhabung des Dichteinsatzes A dienende Setzwerkzeug B ist in Fig. 8 und 9 dargestellt. Es umfaßt als gehäusebildende Bestandteile einen Zentrierring 20, einen Entriegelungszylinder 21, einen Zwischenring 22, einen Spannzylinder 23 und eine Glocke 24, die sämtlich durch Verschrauben miteinander verbunden sind.

Der Spannzylinder 23 weist einen als Hohlzylinder ausgebildeten Spannkolben 23a auf, in den eine hohlzylindrische Kolbenstange 23b mit Bund 23c eingeschraubt ist. An der Kolbenstange 23b sind zwei Bolzen 23d befestigt, die radial schwenkbare Spannklinken 23e tragen.

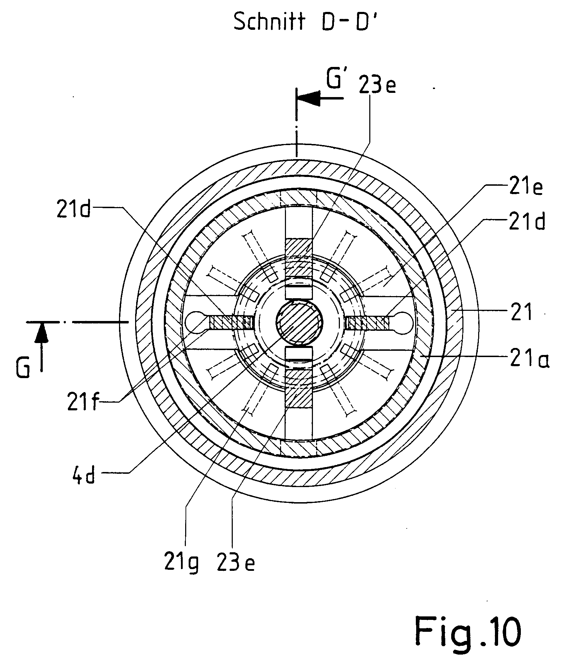

Der Entriegelungskolben 21a des Entriegelungszylinders 21 ist mit einem Tragkörper 21b versehen, an dem an zwei Bolzen 21c Entriegelungshaken 21d radial schwenkbar gelagert sind. Weiterhin ist an dem Entriegelungskolben 21a ein ringförmiger Profilkörper 21e angeflanscht, dessen Außenumfang Führungsbahnen 21f für die Spannklinken 23e und die Entriegelungshaken 21d aufweist und an dem nach innen gerichtete Führungsrippen 21g zur zentrierenden Aufnahme des Spannankers 4 des Dichteinsatzes A vorgesehen sind (Fig.10). Die Entriegelungshaken 21d tragen je eine schwenkbare Klappe 21h, die bei nach innen gerichtetem Schwenken der Entriegelungshaken 21d am Umfang des Flansches 12b der Hülse 12 anliegt. Wird der Flansch 12b von den Entriegelungshaken 21d vollständig hintergriffen, rastet die Klappe 21h über dem Flansch 12b ein.

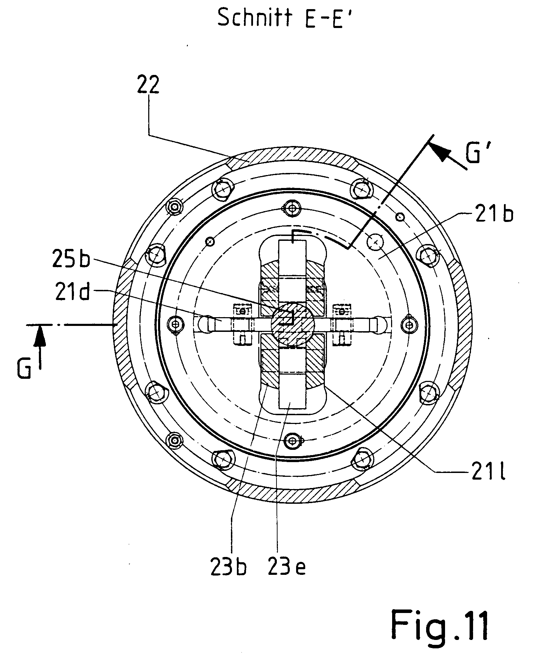

In der Glocke 24 befindet sich ein Steuerzylinder 25, der einen mit Nocken 25a versehenen Steuerschieber 25b im Innenraum der Kolbenstange 23b axial verschiebt, wobei die Spannklinken 23e und die Entriegelungshaken 21d, an ihren Hebelenden 23 f, 21i und Steuerkurven 23g, 21k auf dem Steuerschieber 25b gleitend, radial geschwenkt werden. Eine Verdrehsicherung der Spannklinken 23e gegenüber dem Steuerschieber 25b ist durch in der Kolbenstange 23b befindliche Schraubbolzen 23h, die in axiale Schlitze 25c des Steuerschiebers 25b eingreifen, gegeben. Eine entsprechende Sicherung der Entriegelungshaken 21d gegenüber dem Steuerschieber 25b erfolgt, indem die Kolbenstange 23b des Spannkolbens 23a in einer im Innern des Tragkörpers 21b des Entriegelungskolbens 21a ausgesparten Kulisse 21 l axial geführt ist (Fig. 11).

Die Glocke 24 weist weiterhin eine Lastöse 26 und nicht dargestellte Hydraulikkupplungen auf, die von einem Bedienungspult ausgehende Hydraulikschläuche zum Betätigen des Spannzylinders 23, des Entriegelungszylinders 21 und des Steuerzylinders 25 mit am Setzwerkzeug B angeordneten Hydraulikleitungen verbinden. Die Hydraulikleitungen liegen in Nuten der Oberfläche des Setzwerkzeuges B, womit ihr Schutz vor Beschädigung und eine glatte Werkzeugoberfläche erreicht wird.

Im folgenden soll das Zusammenwirken von Dichteinsatz A und Setzwerkzeug B für den Fall der Abdichtung eines in einem flüssigkeitsgefülltem Behälter vertikal angeordneten Pumpenstutzens 15 näher erläutert werden.

Auf den in einem Lagergestell befindlichen, entspannten Dichteinsatz A mit nach oben gerichtetem Spannanker 4 wird das an der Lastöse 26 hängende Setzwerkzeug B abgesenkt. Dabei sind die Entriegelungshaken 21 d und die Spannklinken 23e des Setzwerkzeuges B, betätigt durch den Steuerschieber 25b, nach außen geschwenkt. Der in die Führungsrippen 21g des Profilkörpers 21e eintauchende Kopf 4d des Spannankers 4 bewirkt eine Vorzentrierung des Setzwerkzeuges B. Die endgültige Zentrierung ist mit dem Aufsitzen des Zentrierringes 22 auf den Lagerböcken 8 und der radialen Anlage am Durchmesser der Zentrierbolzen 14 erreicht (Fig. 8). Daraufhin werden die Spannklinken 23e und die Entriegelungshaken 21d nach innen geschwenkt, so daß die Spannklinken 23e den Kopf 4d des Spannankers 4 und die Entriegelungshaken 21d den oberen Flansch 12b der Hülse 12 hintergreifen (Fig. 9). Der aufwärts gerichtete Hub des Entriegelungskolbens 21a führt nun zu einer Verschiebung der Hülse 12 gegen die Anschläge 8a der Lagerböcke 8. Derart mit dem Setzwerkzeug B verbunden, wird der Dichteinsatz A dem Lagergestell entnommen und in den in der Flüssigkeit befindlichen Pumpenstutzen 15 eingesetzt, so daß die Dichtung 6 des Dichteinsatzes A an der Flanschfläche des Pumpenstutzens 15 anliegt (Fig. 1).

In Vorbereitung des Dichtvorganges wird der Entriegelungskolben 21a abwärts bewegt. Die Hülse 12 folgt dieser Bewegung unter Wirkung der Schwerkraft bzw. durch den Druck, den die an den Entriegelungshaken 21d angeordneten, federbelasteten Klappen 21h auf den oberen Flansch 12b der Hülse 12 ausüben. Damit wird ein radial nach innen gerichtetes Schwenken der Sperrklinken 10 bei Verschiebung des Spannankers 4 in Spannrichtung s möglich.

Zur Abdichtung des Pumpenstutzens 15 wird Spannanker 4 durch den aufwärts gerichteten Hub des Spannkolbens 23a in Spannrichtung s bewegt, wobei sich der Zentrierring 20 des Setzwerkzeuges B auf den Lagerböcken 8 abstützt. Die auf den Dichtring 3 übertragene Spannkraft führt zu einer abdichtenden Flächenpressung des Außenumfanges des Dichtrings 3 an der Stutzeninnenwand. Dabei wird vom Dichtring 3 eine der Spannrichtung s des Spannankers 4 entgegengerichtete Reaktionskraft auf die axial wirkende Dichtung 6 übertragen, womit ein höherer Dichtheitsgrad der Dichtung 6 erreichtbar ist, als er bei ausschließlich hydrostatischer Krafteinwirkung vorliegt. Nunmehr kann der Spannkolben 23a abwärts bewegt werden, da der Spannzustand des Dichteinsatzes A durch Verriegelung mittels der Sperrklinken 10 erhalten bleibt. Durch axiale Bewegung des Steuerschiebers 25b werden die Entriegelungshaken 21d und Spannklinken 23e nach außen geschwenkt. Daraufhin kann das Setzwerkzeug B angehoben und damit vom Dichteinsatz A getrennt werden.

Für einen Ausbau des Dichteinsatzes A aus dem Pumpenstutzen 15 ist, nach dem bereits beschriebenen Absenken und Zentrieren des Setzwerkzeuges B und dem Einschwenken der Entriegelungshaken 21d und Spannklinken 23e, der Spannkolben 23a soweit in Spannrichtung s zu bewegen, daß die Sperrklinken 10 entlastet sind. Infolge der Aufwärtsbewegung des Entriegelungskolbens 21a werden an der Hülse 12 die Sperrklinken 10 nach außen geschwenkt. Der somit entriegelte Dichteinsatz A wird bei abwärts bewegtem Spannkolben 23a entspannt und dem Pumpenstutzen 15 an der Hülse 12 entnommen. Die Trennung des Dichteinsatzes A vom Setzwerkzeug B ist nach der abwärts gerichteten Verschiebung der Hülse 12 und dem Ausschwenken der Entriegelungshaken 21d und der Spannklinken 23e möglich.

Die Verwendung der Dichteinrichtung ist nicht auf Flüssigkeiten begrenzt. Für eine Abdichtung bzw. Trennung von gasförmigen Medien eignet sich die Dichteinrichtung ebenso.

### Bezugszeichen-Liste

### Dichteinsatz A

- 1: Stopfenkern
- 2: Stopfenmantel
- 3: Dichtring
- 4: Spannanker
- 4a: Spannankerflansch
- 4b: Vorsprung
- 4c: Ausnehmungen
- 4d: Kopf

- 5: Ringscheibe
- 6: Dichtung
- 7: Sicherungsring
- 8: Lagerbock
- 8a: Anschlag
- 9: Bolzen
- 10: Sperrklinke
- 10a: Gleitflächen
- 10b: Klinkenstufe
- 11: Federbein
- 12: Hülse
- 12a: Gleitstücke
- 12b: oberer Flansch
- 12c: unterer Flansch
- 12d: Langlöcher
- 12e: Außenbundstück
- 13: Abstandsring
- 14: Zentrierbolzen
- 15: Pumpenstutzen

Spannrichtung s

### Bezugszeichen-Liste

### Setzwerkzeug B

- 20: Zentrierring
- 21: Entriegelungszylinder
- 21a: Entriegelungskolben
- 21b: Tragkörper
- 21c: Bolzen
- 21d: Entriegelungshaken
- 21e: Profilkörper
- 21f: Führungsbahn
- 21g: Führungsrippen
- 21h: Klappe
- 21i: Hebelende
- 21k: Steuerkurve
- 21l: Kulisse

- 22: Zwischenring
- 23: Spannzylinder
- 23a: Spannkolben
- 23b: Kolbenstange
- 23c: Bund
- 23d: Bolzen
- 23e: Spannklinken
- 23f: Hebelende
- 23g: Steuerkurve
- 23h: Schraubbolzen
- 24: Glocke
- 25: Steuerzylinder
- 25a: Nocken
- 25b: Steuerschieber
- 25c: Schlitz
- 26: Lastöse

## Patentansprüche

1. Dichteinrichtung für zylindrische Öffnungen, insbesondere zum Verschließen von Pumpenstutzen im Innenraum von Kernreaktomehältem, mit einem zylindrischen Dichteinsatz aus zwei koaxialen, axial zueinander verschieblichen Dichtkörperteilen, deren gegeneinander gerichtete Verschiebung zu einer Vergrößemng des Außendurchmessers eines zwischen den Dichtkörperteilen befindlichen, elastischen Dichtringes führt und eine abdichtende Flächenpressung zwischen dem Außenumfang des Dichtringes und dem Innenumfang der zylindrischen Öffnung erzeugt und einem fembedienbaren, mit dem Dichteinsatz kuppelbaren Setzwerkzeug, über das ein Spannen und Verriegeln bzw. Entriegeln und Entspannen des Dichteinsatzes in Dichtposition bewirkt wird, dadurch gekennzeichnet, daß
a) der Dichteinsatz A zur Verriegelung in Dichtposition über, mit einem Spannanker (4) zusammenwirkende,Sperrklinken (10) verfügt und zur Entriegelung eine koaxial zum Spannanker (4) angeordnete, auf diesem axial verschiebliche und durch einen im Setzwerkzeug B befindlichen Entriegelungszylinder (21) betätigte Hülse (12) aufweist,
b) ein als Hohlkolben ausgebildeter Entriegelungskolben (21a) einen Tragkörper (21b) aufweist, an dem radial schwenkbar Entriegelungshaken (21d) angeordnet sind, die zur Verschiebung der Hülse (12) an deren oberem Flansch (12b) angreifen,
c) eine in einem Spannkolben (23a) eines Spannzylinders (23) befindliche hohlzylindrische Kolbenstange (23b) radial schwenkbare Spannklingen (23e) zum Erfassen des Kopfes (4d) des Spannankers (4) aufweist und von einem axial bewegbaren Steuerschieber (25b) zum Schwenken der Entriegelungshaken (21d) und Spannklinken (23e) durchdrungen ist und
d) der Steuerschieber (25b) und der Tragkörper (21 b) an der Kolbenstange (23b) verdrehsicher axial geführt sind.

2. Dichteinrichtung nach Anspruch 1, dadurch gekennzeichnet, daß die Hülse (12) aus mehreren Teilen besteht, die auf dem Spannanker (4) zu einem starren Körper verbunden werden.

3. Dichteinrichtung nach Anspruch 2, dadurch gekennzeichnet, daß die Hülse (12) aus drei Gleitstücken (12a) und zwei radial zweigeteilten Flanschen (12b, 12c) aufgebaut ist.

4. Dichteinrichtung nach Anspruch 1, dadurch gekennzeichnet, daß die Ringscheibe (5) dichtringseitig eine Dichtung (6) aufweist.

5. Dichteinrichtung nach Anspruch 1, dadurch gekennzeichnet, daß der Entriegelungskolben (21a) mit einem ringförmigen Profilkörper (21e) verbunden ist, der am Außenumfang Führungsbahnen (21f) für die Entriegelungshaken (21d) und die Spannklinken (23e) aufweist und an dem nach innen gerichtete Führungsrippen (21g) zur zentrischen Aufnahme des Spannankers (4) vorgesehen sind.

6. Dichteinrichtung nach Anspruch 1, dadurch gekennzeichnet, daß der Dichteinsatz A durch die Verschiebung der Hülse (12) in Spannrichtung s und die dadurch hervorgerufene radial nach außen gerichtete Schwenkbewegung der Sperrklinken (10) entriegelbar ist.

## Claims

1. Sealing device for cylindrical openings, in particular for sealing pump connection pieces in the interior of nuclear reactor containers, having a cylindrical sealing insert comprising two coaxial sealing member parts which can be displaced axially relative to one another and of which the displacement towards each another leads to an enlargement of the external diameter of a resilient sealing ring located between the sealing member parts and generates a sealing surface pressure between the external periphery of the sealing ring and the internal periphery of the cylindrical opening, and a setting tool which can be operated by remote-control, which can be coupled to the sealing insert and which causes clamping and locking or unlocking and release respectively of the sealing insert in the sealing position, characterized in that:
a) in order to be locked in the sealing position the sealing insert A comprises locking pawls (10) cooperating with a clamping armature (4) and in order to be unlocked it comprises a sleeve (12) which is disposed coaxially to the clamping armature (4), which is axially displaceable on the latter, and which is actuated by an unlocking cylinder (21) located in the setting tool B;
b) an unlocking piston (21a) in the form of a hollow piston comprises a support member (21b) on which radially pivotable unlocking hooks (21d) are disposed which act on the upper flange (12b) of the sleeve (12) in order to displace the latter;
c) a hollow-cylindrical piston rod (23b) located in a clamping piston (23a) of a clamping cylinder (23) comprises radially pivotable clamping pawls (23e) for grasping the head (4d) of the clamping armature (4) and is penetrated by an axially movable control slide (25b) for pivoting the unlocking hooks (21d) and clamping pawls (23e); and
d) the control slide (25b) and the support member (21b) are guided axially on the piston rod (23b) such that they are secure against rotation.

2. Sealing device according to Claim 1, characterized in that the sleeve (12) comprises a plurality of parts which are connected on the clamping armature (4) to form a rigid body.

3. Sealing device according to Claim 2, characterized in that the sleeve (12) is constructed of three sliding parts (12a) and two flanges (12b, 12c) divided radially into two parts.

4. Sealing device according to Claim 1, characterized in that the annular disc (5) comprises a seal (6) on the sealing ring side.

5. Sealing device according to Claim 1, characterized in that the unlocking piston (21a) is connected to an annular profiled member (21e) which comprises on the external periphery guide tracks (21f) for the unlocking hooks (21d) and the clamping pawls (23e) and on which inwardly directed guide ribs (21g) are provided for centrally accommodating the clamping armature (4).

6. Sealing device according to Claim 1, characterized in that the sealing insert A can be unlocked by the displacement of the sleeve (12) in clamping direction s and the radially outwardly directed pivot movement of the locking pawls (10) caused thereby.

## Revendications

1. Dispositif d'étanchéité pour ouvertures cylindriques, en particulier pour obturer un manchon de pompe à l'intérieur des cuves d'un réacteur nucléaire, le dispositif comprenant une garniture d'étanchéité formée de deux parties coaxiales d'un corps d'étanchéité, pouvant axialement glisser et se rapprocher l'une de l'autre, et dont la translation dirigée l'une vers l'autre a pour résultat un agrandissement du diamètre extérieur d'une bague élastique d'étanchéité se trouvant entre les parties du corps d'étanchéité et produit une pression surfacique, à rôle d'étanchéité, entre la périphérie extérieure de la bague d'étanchéité et la périphérie intérieure de l'ouverture cylindrique, et un outil de réglage et d'ajustement, télécommandable et pouvant être couplé ou associé à la garniture d'étanchéité, cet outil permettant un serrage et un verrouillage ou un déverrouillage et un desserrement de la garniture d'étanchéité en position d'étanchéité, dispositif caractérisé en ce que
a) la garniture A d'étanchéité pour le verrouillage en position d'étanchéité comporte un cliquet de serrage (10) coopérant avec une pièce d'ancrage et de serrage (4) et, pour le déverrouillage cette garniture présente une gaine (12) disposée coaxiale par rapport à l'ancre de serrage (4), pouvant glisser axialement sur cette ancre et commandée par un vérin de déverrouillage (21) se trouvant dans l'outil B de réglage ;
b) un piston (21a) de déverrouillage, en forme de piston creux présente un corps porteur (21b) sur lequel sont disposés des crochets (21d) de déverrouillage pouvant osciller radialement et qui, pour le déplacement de translation de la gaine (12), attaquent le rebord supérieur (12b) de la gaine ;
c) une tige (23b) cylindrique creuse se trouvant dans un piston de serrage (23a) d'un vérin de serrage (23) présente des lames (23e) de serrage, pouvant osciller radialement et destinées à saisir la tête (4d) de l'ancre (4) de serrage et est traversée par un tiroir de commande (25b) mobile axialement pour faire basculer le crochet (21d) de déverrouillage et les lames (23e) de serrage ; et
d) le tiroir de commande (25b) et le corps de support ou porteur (21b) sont guidés axialement sur la tige (23b) de piston, sans pouvoir tourner.

2. Dispositif d'étanchéité selon la revendication 1, caractérisé en ce que la gaine (12) consiste en plusieurs parties qui sont reliées à l'ancre de serrage (4) pour former un corps rigide.

3. Dispositif d'étanchéité selon la revendication 2, caractérisé en ce que la gaine (12) est constituée de deux morceaux glissants (a) et par deux rebords (12b, 12c) radialement divisés en deux.

4. Dispositif d'étanchéité selon la revendication 1, caractérisé en ce que la rondelle (5) présente un joint d'étanchéité (6) situé du côté de la bague d'étanchéité.

5. Dispositif d'étanchéité selon la revendication 1, caractérisé en ce que le piston de déverrouillage (21a) est relié à un corps profilé (21e) de forme annulaire, qui présente sur sa périphérie extérieure des pistes (21f) pour le guidage de crochets (21d) de déverrouillage et des cliquets (23e) de serrage, et sur lequel sont prévus des nervures de guidage (21g), dirigées vers l'intérieur pour la réception centrale de l'ancre (4) de serrage.

6. Dispositif d'étanchéité selon la revendication 1, caractérisé en ce que la garniture d'étanchéité A est déverrouillable par la translation de glissement de la gaine (12) dans la direction de serrage s et par le mouvement de pivotement, ainsi provoqué radialement vers l'extérieur, des cliquets (10) de blocage.
